# EUROPÄISCHE PATENTSCHRIFT

(11) **EP 3 906 653 B1**
(45) Veröffentlichungstag und Bekanntmachung des Hinweises auf die Patenterteilung: **21.12.2022**
(21) Anmeldenummer: 20714931.1
(22) Anmeldetag: 17.03.2020
(51) Int. Cl.: H04L 9/40

(54) **VERFAHREN ZUM AUSSTELLEN EINER KRYPTOGRAPHISCH GESCHÜTZTEN AUTHENTIZITÄTSBESCHEINIGUNG FÜR EINEN BENUTZER**
METHOD FOR ISSUING A CRYPTOGRAPHICALLY PROTECTED AUTHENTICITY CERTIFICATE FOR A USER
PROCÉDÉ DE DÉLIVRANCE D'UN CERTIFICAT D'AUTHENTICITÉ PROTÉGÉ DE MANIÈRE CRYPTOGRAPHIQUE POUR UN UTILISATEUR

(30) Priorität: 05.04.2019 EP 19167507
(43) Veröffentlichungstag der Anmeldung: 10.11.2021
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2020/057276
(87) Internationale Veröffentlichungsnummer: WO 2020/200766

(56) Entgegenhaltungen:
- DE-A1-102013 203 101
- DE-A1-102015 101 014

## Beschreibung

Die Erfindung betrifft ein Verfahren zum Ausstellen einer kryptographisch geschützten Authentizitätsbescheinigung für einen Benutzer, wie z.B. eines digitalen Zertifikats, insbesondere eines Gerätezertifikats, für einen Benutzer sowie zugehörige Vorrichtungen.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

In einem zertifikatbasierten System erhält jede Person oder jedes Objekt, z.B. ein Gerät oder ein Softwareprozess, eine Authentizitätsbescheinigung, wie beispielsweise ein digitales Zertifikat, eine Datenstruktur (oder ein Datensatz), welche Angaben zu seiner Identität und einen öffentlichen Schlüssel der Person bzw. des Benutzers bzw. des Objekts bzw. des Geräts enthält. Jedes Zertifikat ist von einer ausgebenden Stelle durch eine digitale Signatur beglaubigt, die ihrerseits wieder von höheren Stellen beglaubigt sein kann. Da die digitale Signatur die komplette Datenstruktur umfasst, wird deren Inhalt damit integritätsgeschützt. Das Vertrauenssystem einer solchen Private Key Infrastructure (PKI) ist hierarchisch. Den gemeinsamen Vertrauensanker bildet ein sogenanntes Wurzelzertifikat, auch Root Certificate genannt, welches in allen relevanten Systemkomponenten authentisch konfiguriert sein muss.

Auch die Authentizität und Integrität eines digitalen Zertifikats werden durch die digitale Signatur geprüft. Dazu wird mit Hilfe eines geheimen Signaturschlüssels, auch als privater Schlüssel bezeichnet, zu einem Datensatz ein Wert berechnet, der digitale Signatur genannt wird. Dieser Wert ermöglicht es jedem, mit Hilfe des zugehörigen öffentlichen Verifikationsschlüssels, auch als öffentlicher Schlüssel bezeichnet, die nichtabstreitbare Urheberschaft und Integrität des Datensatzes zu prüfen. Um eine mit einem Signaturschlüssel erstellte Signatur einem Benutzer zuordnen zu können, muss der zugehörige Verifikationsschlüssel diesem Benutzer zweifelsfrei zugeordnet sein.

Eine Zertifizierungsinstanz wird im Weiteren auch allgemein als Vorrichtung zur Ausgabe oder Ausgabevorrichtung von Zertifikaten bezeichnet.

Möglich ist ebenfalls die Speicherung von geheimen symmetrischen und privaten asymmetrischen Schlüsseln in physikalisch besonders geschützten Sicherheitsmodulen wie beispielsweise kryptographische Prozessoren, hardware security modules (HSM) oder trusted platform modules (TPM). Ein Sicherheitsmodul kann auch software-/firmwaremäßig implementiert sein. Geheime bzw. private Schlüssel können in das Sicherheitsmodul eingespielt oder darin erzeugt werden. Ein Auslesen der Schlüssel aus dem Sicherheitsmodul ist üblicherweise nicht oder nur sehr eingeschränkt möglich.

Für jedes Gerät, das einem Benutzer gehört, kann ein neues, asymmetrisches Schlüsselpaar erzeugt werden. Der private Schlüssel muss im Gerät verbleiben und gegen unberechtigte Nutzung und besonders gegen Auslesen und Kopieren zuverlässig geschützt werden; der öffentliche Schlüssel wird in authentischer Weise zu einer Certification Authority, abgekürzt CA, die als Ausgabevorrichtung ausgestaltet sein kann, transportiert, welche ihn zusammen mit anderen Gerätedaten (Seriennummer, Typ, Herstellername, Produktionsdatum, usw.) in einer Datenstruktur digital signiert. Um sicherzustellen, dass der Besitzer des öffentlichen Schlüssels und der dazugehörigen Gerätedaten auch im Besitz des korrespondierenden privaten Schlüssels ist, ist der vom Gerät produzierte Datensatz ebenfalls häufig digital signiert, mit dem entsprechenden privaten Schlüssel des Geräts bzw. Benutzers, um den Transport vom Gerät zur CA zu schützen. Das Gerät kann ein IOT-Gerät oder anderes Gerät sein, das beispielsweise ein Sicherheitsmodul aufweist.

Digitale Zertifikate werden in der Regel zur Authentisierung von Benutzern benötigt, insbesondere auch zur Authentisierung von Geräten bzw. Komponenten eines industriellen Automatisierungs-/Steuerungssystems.

Ein digitales Zertifikat wird üblicherweise - wie oben beschrieben - von einer Public Key Infrastruktur (PKI) ausgestellt. Der Aufbau und Betrieb einer sicheren PKIs sind jedoch relativ aufwendig. Es ist möglich, dass eine technische PKI-Instanz von mehreren Mandanten gemeinsam benutzt wird. Obwohl die technische PKI-Infrastruktur gemeinsam durch mehrere Mandanten genutzt wird, erscheint es aus logischer Sicht so, als ob ein Mandant jeweils seine eigene PKI-Infrastruktur nutzen würde. Mandanten können beispielsweise unterschiedliche Betreiber von Automatisierungssystemen, unterschiedliche Automatisierungs-Anlagen oder unterschiedliche Firmen oder Geschäftsbereiche sein, die jeweils eine PKI-Infrastruktur benötigen. Benutzer, die einem Mandanten zugeordnet sind, können in diesem Zusammenhang Gerätehersteller-Servicepersonal oder auch Servicepersonal eines Automatisierungs-/Steuerungssystembetreibers sein. Hierbei übernehmen die Benutzer verschiedene Rollen, auf welche Weise sie Zugriff auf die Geräte und/oder Komponenten eines Benutzers bzw. eines Systems erhalten, um beispielsweise bestimmte Konfigurations- bzw. Wartungsarbeiten eines Mandanten zu erledigen. Über diese Rollen werden die Benutzer zu bestimmten Aufgabenerledigungen an Geräten des Benutzers bzw. des Systems autorisiert. Jedoch ist es aufwendig, einen Mandanten sicher bei der PKI-Infrastruktur einzurichten und zu pflegen. Ein Mandant ist dabei typischerweise ein für einen Betreiber abgeschlossener Bereich der PKI, der nicht mit anderen Betreibern geteilt wird.

DE 10 2013 203101 A1 offenbart ein Verfahren zum Ausstellen eines Zertifikats für einen Benutzer, das ein zwischen dem Client verbundenes zwischengeschaltetes Gerät, das Bereitstellen mindestens eines Attributs durch den Vermittler an den Berechtigungsaussteller und das Einbeziehen dieses Attributs in das Zertifikat umfasst. DE 10 2015 101014 A1 offenbart ein ähnliches Verfahren zum Bereitstellen eines Zertifikats für einen Benutzer, wobei ein Zertifikat nach einer erfolgreichen Benutzerauthentifizierung bereitgestellt wird.

Es ist Aufgabe der vorliegenden Erfindung, Verfahren und Vor- bzw. Einrichtungen bzw. Geräten gegenüber dem oben genannten Stand der Technik zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zum Ausstellen einer kryptographisch geschützten Authentizitätsbescheinigung für einen Benutzer, aufweisend folgende Schritte:
- Bereitstellen eines öffentlichen Benutzerschlüssels des Benutzers,
- Bereitstellen eines öffentlichen Mandantenschlüssels für einen Mandanten, der dem Benutzer zugeordnet wird, wobei ein Mandant vollautomatisch eingerichtet wird, indem durch den öffentlichen Mandantenschlüssel eine Zertifikatsanforderung überprüft wird,
- Bilden einer Anfrage zum Ausstellen der kryptographisch geschützten Authentizitätsbescheinigung, wobei die Anfrage einen vom öffentlichen Mandantenschlüssel abhängigen, kryptographischen Mandantenidentifikator (M-ID) sowie den öffentlichen Benutzerschlüssel enthält und mit Hilfe des dem bereitgestellten öffentlichen Mandantenschlüssel zugeordneten privaten Mandantenschlüssels geschützt und/oder digital signiert wird, und
- Ausstellen einer kryptographisch geschützten Authentizitätsbescheinigung, die den öffentlichen Benutzerschlüssel sowie ein Informationselement zur Identifizierung bzw. Kennzeichnung desjenigen Mandanten, der die Anfrage mittels seines privaten Mandantenschlüssel geschützt und/oder digital signiert hat, enthält und den Mandanten identifiziert, wobei die kryptographisch geschützte Authentizitätsbescheinigung den kryptographischen Mandantenidentifikator (M-ID) enthält oder referenziert, der abhängig vom öffentlichen Mandantenschlüssel aus dessen Hashwert gebildet wird.

Der Mandant wird identifiert, indem die Zugehörigkeit der Anfrage zum Mandanten bestätigt wird oder ist oder positiv geprüft wird.

Dabei enthält die bereitgestellte Authentizitätsbescheinigung den öffentlichen Benutzerschlüssel, wie allgemein üblich. Zusätzlich enthält sie jedoch ein Informationselement zur Identifizierung bzw. Kennzeichnung desjenigen Mandanten, der die Anfrage mittels seines privaten Mandantenschlüssel geschützt und/oder digital signiert hat.

Die Erfindung bringt den Vorteil mit sich, dass kein explizites Einrichten von Mandanten in der PKI-Infrastruktur erforderlich ist. Mandanten sind implizit durch den öffentlichen Mandantenschlüssel gegeben, mit dem eine Zertifikatsanforderung überprüfbar ist. Dadurch kann ein Mandant vollautomatisch und ggf. "on the fly" für jede Zertifikatsanforderung eingerichtet werden. Trotzdem ist sichergestellt, dass die Authentizitätsbescheinigungen eines ersten Mandanten von solchen eines zweiten Mandanten zuverlässig unterschieden werden können.

Ein Mandant kann weitere öffentliche Schlüssel (public Keys) hinterlegen, die dem öffentlichen Mandantenschlüssel zugeordnet sind. Dann können Zertifikatsanforderungen dieses Mandanten auch mit den weiteren, jeweils dem öffentlichen Schlüssel zugeordneten privaten Schlüsseln geschützt werden.

Die Zertifizierungsanfrage für eine, den Benutzeridentifizierende Authentizitätsbescheinigung, enthält oder referenziert vorzugsweise einen kryptographischen Mandantenidentifikator, der abhängig vom öffentlichen Mandantenschlüssel gebildet wird. Es ist jedoch auch möglich, dass einer Zertifizierungsanfrage ein kryptographischen Mandantenidentifikator automatisch hinzugefügt wird.

Damit bestätigt/autorisiert der "Anfragende", d.h. der jeweilige Mandant, dass das Ausstellen des Zertifikats zulässig ist.

Die Anfrage kann einen vom öffentlichen Mandatenschlüssel abhängigen Mandantenidentifikator umfassen. Der Mandantenidentifikator kann aus dem Hashwert des öffentlichen Mandantenschlüssels gebildet werden.

Die Anfrage zum Ausstellen der kryptographisch geschützten Authentizitätsbescheinigung für einen Benutzer kann nach einer Authentifizierung des Mandanten gebildet und/oder übertragen werden, wobei die Anfrage über eine mit Hilfe einer Mandantenkennung oder mit Hilfe des gebildeten Mandantenidentifikators authentisierte Kommunikationsverbindung (z.B. TLS/IPsec/IKE) übertragen werden kann.

Bei einer die Anfrage bildenden und weiterleitenden Stelle z.B. eine Registration Authority (RA), kann die Authentisierung der Anfrage und basierend darauf die Autorisierung erfolgen. Letztendlich ist die Authentisierung eine Art "Zertifikatsaustellungsautorisierungs-Identifikator". Damit bestätigt der Benutzer bzw. die Anfrage bildende und weiterleitende Stelle (RA) die Zulässigkeit einer Zertifikatsausstellung.

Ein weiterer Aspekt der Erfindung ist eine Vorrichtung, insbesondere eine Certificate Authority (CA), zum Ausstellen einer kryptographisch geschützten Authentizitätsbescheinigung für einen Benutzer mit Hilfe eines bereitgestellten öffentlichen Benutzerschlüssels, aufweisend:
- eine Bestätigungseinheit, die dazu ausgelegt ist, eine kryptographisch geschützte Authentizitätsbescheinigung auszustellen, die den öffentlichen Benutzerschlüssel enthält und den Mandanten identifiziert, wobei sie die Zugehörigkeit und/oder die Zulässigkeit einer vorherigen Authentizitätsbescheinigungsanfrage zum Mandanten bestätigt (bzw. geprüft wird).

Ein weiterer Aspekt der Erfindung ist eine Vorrichtung, insbesondere eine Registration Authority (RA), zum Ausstellen einer kryptographisch geschützten Authentizitätsbescheinigung für einen Benutzer, aufweisend:
- eine Bereitstellungseinheit, die dazu ausgelegt ist, einen öffentlichen Mandantenschlüssel für einen Mandanten bereitzustellen, der dem Benutzer zugeordnet wird, und
- eine Erzeugungseinheit, die dazu ausgelegt ist, eine Anfrage zum Ausstellen der kryptographisch geschützten Authentizitätsbescheinigung zu bilden, wobei die Anfrage, die einen öffentlichen Benutzerschlüssel des Benutzers enthält oder mit diesem digital signiert ist, mit Hilfe des dem bereitgestellten öffentliche Mandantenschlüssels zugeordneten privaten Mandantenschlüssels schützbar und/oder digital signierbar ist.

Des Weiteren ist ein Computerprogramm(produkt) umfassend Programm-Code vorgesehen, der von mindestens einem Prozessor ausgeführt werden kann und der bewirkt, dass der mindestens eine Prozessor, das erfindungsgemäße (Betriebs-)Verfahren und dessen Ausführungsformen ausführt. Das Computerprogramm kann auf einer Vorrichtung der vorstehend genannten Art ablaufen oder als Computerprogrammprodukt auf einem computerlesbaren Medium gespeichert sein.

Die Vorrichtungen, Einrichtungen bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
- Figur 1: ein Ausführungsbeispiel zur Anforderung bzw. zur Ausgabe von Authentizitätsbescheinigungen bzw. Zertifikaten,
- Figur 2: ein Ausführungsbeispiel für eine Zertifikatsanforderungsnachricht und
- Figur 3: ein Ausführungsbeispiel für ein angefordertes Zertifikats.

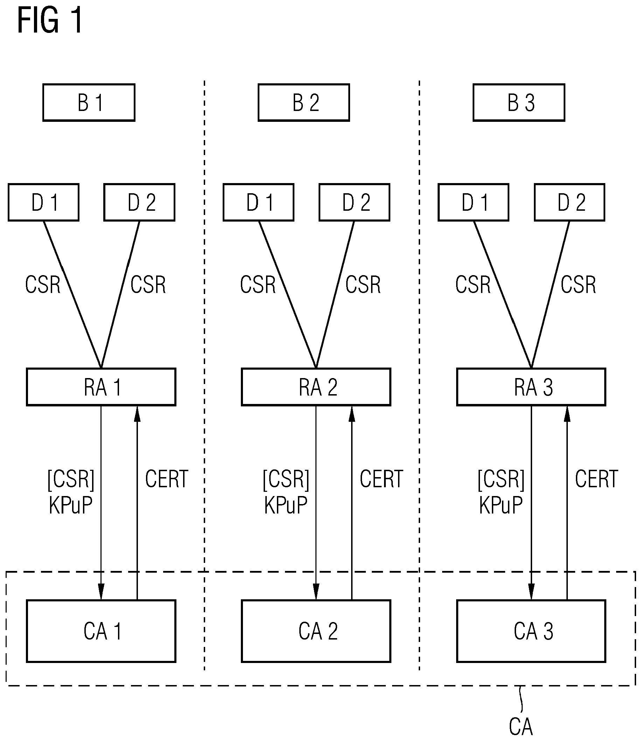

In Figur 1 zeigt erfindungsgemäß ein Vorgehen zur Anforderung bzw. zur Ausgabe von Authentizitätsbescheinigungen bzw. Zertifikaten,

Drei verschiedene Betreiber B1, B2, B3 bzw. Benutzer nutzen eine lokale Registrierungsstelle (Registration Authority) RA1, RA2, RA3, um Zertifikatsabfragen zu autorisieren. Alle drei Betreiber nutzen jeweils einen eigenen Zertifikatsaussteller CA1, CA2, CA3, der die Zertifikate betreiberspezifisch ausstellt. Die drei Betreiber können auch einen einzigen Zertifikatsaussteller CA (gestrichelt dargestellt) nutzen. Dazu hat jede Registrierungsstelle eine authentisierte Kommunikationsverbindung zum Aussteller z.B. CA, der auf Basis der für die Authentisierung genutzten privaten Mandantenschlüssel die Zertifikate ausstellen kann. Im Beispiel können Benutzer, die einem Mandanten zugeordnet sind, verschiedene Rollen übernehmen, wie sie Zugriff auf die Geräte D1 und D2 bzw. Komponenten eines Benutzers z.B. B1 bzw. eines Systems erhalten, um beispielsweise bestimmte Konfigurations- bzw. Wartungsarbeiten zu erledigen. Über die Rollen werden die Benutzer zu bestimmten Aufgabenerledigungen an Geräten des Benutzers bzw. des Systems eines Mandanten autorisiert.

Es wird ein öffentlicher Schlüssel (Public Key) KPUP eines Mandantenschlüsselpaares (öffentl., privater Schlüssel) verwendet, um einen Mandanten zu identifizieren. Automatisiert kann damit ein kryptographischer Mandanten-Identifier bzw. - Identifikator M-ID abhängig vom verwendeten Mandantenschlüsselpaar ermittelt werden (z.B. als Hash-Wert H des öffentlichen Mandantenschlüssels).

Die Anforderung bzw. Anfrage (Certificate Signing Request) CSR eines digitalen Zertifikats CERT ist durch den Mandantenschlüssel geschützt, das in Figur 1 durch die eckige Klammer angedeutet wird. Insbesondere kann eine Zertifikatsanforderung) durch den dem öffentlichen Mandantenschlüssel zugeordneten privaten Mandantenschlüssel digital signiert sein, das mit Sig gekennzeichnet wird. Die Zertifikatsanforderung CSR kann auch über eine mittels des privaten Mandantenschlüssels authentisierte Kommunikationsverbindung (z.B. TLS, IPsec/IKE) übertragen werden.

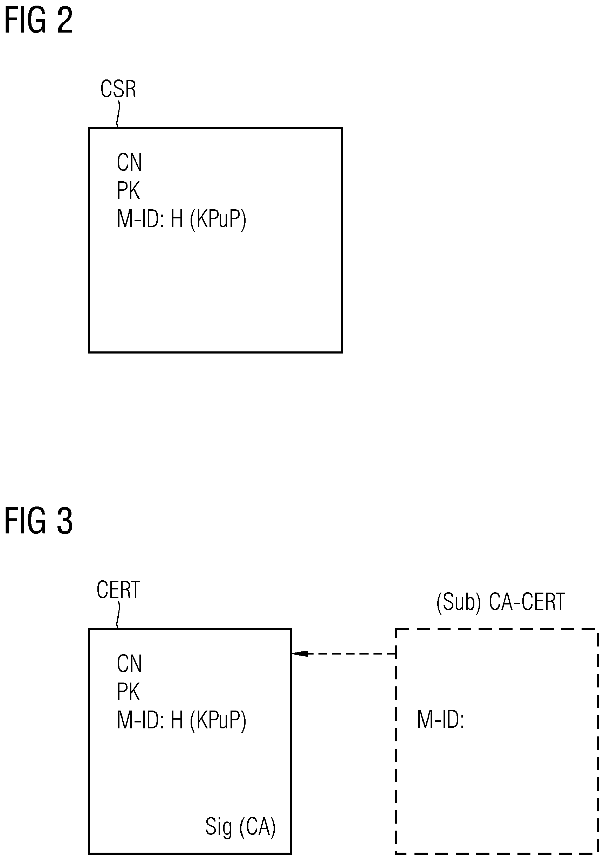

Der Schutz durch den privaten Mandantenschlüssels kann durch einen anfordernden Client-Knoten (Anfragesteller bzw. Requester) selbst erfolgen oder durch einen Zwischenknoten, insbesondere durch eine Registrierungsstelle RA, die eine Zertifikatsanforderungsnachricht nach einer Prüfung des Nachrichteninhalts an einen Zertifikatsaussteller CA weiterleitet. Der kryptographische Mandanten-Identifier bzw. Mandantenidentifikator ist in den ausgestellten Zertifikaten enthalten oder referenziert, die für diesen Mandanten angefordert werden. Er kann in dem Namen CN (siehe Figur 2) des ausgestellten Zertifikats und/oder in dem Namen eines Mandanten-SubCA-Zertifikats enthalten sein. Dadurch kann ein Mandant nur Zertifikate anfordern, die auch tatsächlich ihm (d.h. seinem kryptographischen Mandanten-Identifier) zugeordnet sind. Dabei kann geprüft werden, ob eine Zertifikatsanforderung den passenden kryptographischen Mandanten-Identifier enthält. Nur falls dies der Fall ist, wird das Zertifikat von Zertifikatsaussteller CA ausgestellt, d.h. die Zertifikatsanforderungsnachricht digital von Zertifikatsaussteller CA signiert bzw. ein entsprechend der Zertifikatsanforderungsnachricht CSR gebildetes Zertifikat CERT durch den Zertifikatsaussteller CA digital signiert. Es kann die Zertifikatsanforderungsnachricht auch - wie in Figur 2 angedeutet - modifiziert werden, indem der passende kryptographische Mandanten-Identifier eingetragen wird.

Zusammenfassend sind folgende Ausführungsformen möglich:
- Die Zertifikatsanfragenachricht kann mit dem privaten Mandantenkey digital signiert sein. Die Signatur ist mit dem öffentlichen Mandantenkey überprüfbar. Die Signatur kann durch den anfragenden Client, einen Zertifikatsmanagement-Proxy oder durch eine Registrierungsstelle RA erfolgen.
- Die Zertifikatsanfragenachricht kann zweifach digital signiert sein, einmal mit dem privaten Schlüssel des anfragenden Clients bzw. Benutzer (d.h. mit dem privaten Schlüssel, dessen zugeordneter öffentlicher Schlüssel PK durch das Zertifikat bestätigt werden soll), und einmal mit dem privaten Mandantenschlüssel. Für die digitale Signatur kann z.B. das Re-Signieren einer Zertifizierungsanfrage aus einem CMP-Protokoll (Certificate Management Protocol, IETF Standard RFC 4210)) genutzt werden.
- Bei der Nutzung einer authentisierten Kommunikationsverbindung zur Übermittlung der Zertifizierungsanfrage ist beispielsweise die Nutzung von EST (Enrollment over Secure Transport, IETF Standard RFC 7030) möglich. Hierbei wird eine TLS-Verbindung (Transport Layer Security, IETF Standard RFC 5246) zur Registrierungsstelle RA aufgebaut, die die Zertifizierungsanfrage des Anfragesteller prüft und autorisiert. Eine weitere TLS Verbindung wird von der RA zur ausstellenden CA aufgebaut, in der der private Mandantenschlüssel und ein Zertifikat des zugehörigen Mandanten zur Authentisierung genutzt wird. Ein den öffentlichen Mandantenschlüssel enthaltendes Zertifikat kann beispielsweise die Key Usage extension id-kp-cmcRA gesetzt haben.

Ein Mandant kann weitere öffentliche Schlüssel hinterlegen, die dem öffentlichen Mandantenschlüssel zugeordnet sind. Dann können Zertifikatsanforderungen dieses Mandanten auch mit den weiteren zugeordneten öffentlichen Schlüssel geschützt werden. Diese Anwendung ist flexibel.

Ein Zertifikat kann z.B. nur dann durch die CA ausgestellt (d.h. eine dem Inhalt des CSR entsprechende Datenstruktur signiert), wenn die Anfragenachricht einen Mandanten-Identifier entsprechendes Feld bereits enthält. Alternativ kann die CA diese Information auch aus dem öffentlichen Mandantenschlüssel (Zertifikat) ermitteln.

Der kryptographische Mandanten-Identifier kann grundsätzlich in ein beliebiges Attribut eines Zertifikats codiert bzw. eingefügt sein, z.B. Common Name CN - wie in Figur 3 gezeigt - , Organizational Unit (OU) oder AltName. Sie kann auch implizit enthalten (referenziert) sein, wenn das ausgestellte Zertifikat durch ein SubCA-Zertifikat (Sub)CA-CERT (siehe gestrichelt angedeutet in Figur 3) geschützt ist, das den kryptographischen Mandanten-Identifier M-ID enthält.

Vorzugsweise wird der Name im Zertifikat nicht nur abhängig von dem öffentlichen Schlüssel des Mandantenschlüssels gebildet, sondern auch abhängig von dem zu bestätigenden öffentlichen Schlüssels PK des Gerät D1, D2 (Device Key). Beispiele für das Bilden des Mandanten-Identifiers:
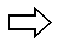 Konkatenieren der Teile KPUP | PK
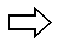 H(KPUP | PK)
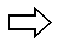 HMAC(KPUP, PK), wobei HMAC Key-Hashed Message Authentification Code bedeutet.

Vorzugsweise ist der CSR doppelt signiert:
- Mandanten Public Key (KPUP)
- Device Public Key (PK)

Vorzugsweise ist eine Zertifikatserweiterung (Certificate Extension) enthalten, die diese spezielle Art der Zertifikatsausstellung referenziert (über eine CA Policy Extension oder eine separate Certificate Extension).

Das folgende Beispiel zeigt eine solche Erweiterung:

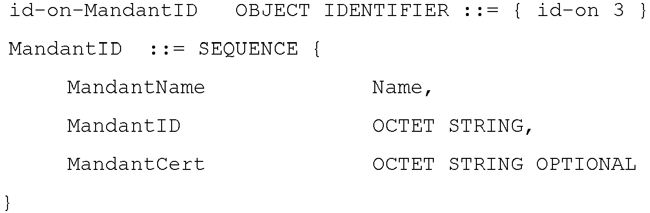

Diese Erweiterung sollte im Zertifikat als "kritisch" markiert werden, da damit bei der Validierung immer die Extension auch mit verarbeitet wird. Damit wird sichergestellt, dass nicht nur die Signatur des Zertifikatsausstellers geprüft wird, sondern auch in wessen Auftrag die Zertifikatserstellung erfolgt ist. Über entsprechende Sicherheitsvorgaben (Security Policy) beim Überprüfer ist der Überprüfer damit in der Lage, ausschließlich Zertifikate, die für einen bestimmten Mandanten ausgestellt wurden, zu nutzen.

Der Parameter MandantID kann insbesondere der Hash-Wert (z.B. SHA256, SHA3) des öffentlichen Mandantenschlüssels sein. Der Mandantenidentifikator MandantID kann binär codiert werden oder als Zeichenkette (z.B. als ASCII-String des Hexadezimalwertes).

Die Zertifikatsvalidierung bzw. -prüfung kann wie folgt durchgeführt werden:
- Ermittle die kryptographische MandantID (whitelist), die z.B. explizit konfiguriert oder implizit aus einem eigenen Zertifikat ("gehört die Anfragestelle (peer-node) zum gleichen Mandanten wie der prüfende Knoten bzw. ist der Mandant bekannt und akzeptiert?".
- Wenn ja, dann wird das Zertifikat akzeptiert.

Optional kann zusätzlich ein DNS-Name mit kryptographischem Namensteil entsprechend dem Zertifikat gebildet werden (z.B. für spontanen Web-Service/Dienst bei node.js: ein Knoten kann spontan einen HTTPS-Service aufsetzen für einen Web-Service, d.h. dass ein zum ausgestellten Zertifikat passender Netzwerkname gebildet wird.)

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät oder auch die Vorrichtung können jeweils ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Ausstellen einer kryptographisch geschützten Authentizitätsbescheinigung (CERT) für einen Benutzer (B1, B2, B3), aufweisend folgende Schritte:
- Bereitstellen eines öffentlichen Benutzerschlüssels,
- Bereitstellen eines öffentlichen Mandantenschlüssels für einen Mandanten, der dem Benutzer zugeordnet wird, wobei ein Mandant vollautomatisch eingerichtet wird, indem durch den öffentlichen Mandantenschlüssel eine Zertifikatsanforderung überprüft wird,
- Bilden einer Anfrage (CSR), die einen vom öffentlichen Mandantenschlüssel abhängigen, kryptographischen Mandantenidentifikator (M-ID) sowie den öffentlichen Benutzerschlüssel enthält und mit Hilfe des dem bereitgestellten öffentlichen Mandantenschlüssel zugeordneten privaten Mandantenschlüssels geschützt und/oder digital signiert wird, und
- Ausstellen einer kryptographisch geschützten Authentizitätsbescheinigung, die den öffentlichen Benutzerschlüssel sowie ein Informationselement zur Identifizierung bzw. Kennzeichnung desjenigen Mandanten, der die Anfrage mittels seines privaten Mandantenschlüssel geschützt und/oder digital signiert hat, enthält und so den Mandanten identifiziert, wobei die kryptographisch geschützte Authentizitätsbescheinigung den kryptographischen Mandantenidentifikator (M-ID) enthält oder referenziert, der abhängig vom öffentlichen Mandantenschlüssel aus dessen Hashwert gebildet wird.

2. Verfahren nach dem vorhergehenden Anspruch, **dadurch gekennzeichnet, dass** die Anfrage zum Ausstellen der kryptographisch geschützten Authentizitätsbescheinigung nach einer Authentifizierung des Benutzers gebildet und/oder übertragen wird.

3. Verfahren nach einem der vorhergehenden Ansprüche, **dadurch gekennzeichnet, dass** die Anfrage über eine mit Hilfe einer Mandantenkennung oder mit Hilfe des gebildeten Mandantenidentifikators authentisierte Kommunikationsverbindung übertragen wird.

4. Verfahren nach einem der vorhergehenden Ansprüche, **dadurch gekennzeichnet, dass** eine Zertifikatsvalidierung durchgeführt wird, welche umfasst:
- Ermitteln des kryptographischen Mandantenidentifikators (M-ID), welcher explizit oder implizit aus einem eigenen Zertifikat konfiguriert ist,
- Akzeptieren des Zertifikats, wenn die Anfragestelle zum gleichen Mandanten wie der prüfende Knoten gehört oder der Mandant bekannt und akzeptiert ist.

5. Vorrichtung (CA) zum Ausstellen einer kryptographisch geschützten Authentizitätsbescheinigung für einen Benutzer mit Hilfe eines bereitgestellten öffentlichen Benutzerschlüssels, aufweisend:
- eine Bestätigungseinheit, die dazu ausgelegt ist, eine kryptographisch geschützte Authentizitätsbescheinigung auszustellen, die den öffentlichen Benutzerschlüssel enthält und den Mandanten identifiziert, wobei sie die Zugehörigkeit einer vorherigen Authentizitätsbescheinigungsanfrage zum Mandanten bestätigt und wobei ein Mandant vollautomatisch eingerichtet wird, indem durch den öffentlichen Mandantenschlüssel eine Zertifikatsanforderung überprüft wird,, wobei die den Mandanten identifizierende Authentizitätsbescheinigung einen kryptographischen Mandantenidentifikator enthält oder referenziert, der abhängig vom Mandantenschlüssel bildbar ist.

6. Vorrichtung (RA) zum Ausstellen einer kryptographisch geschützten Authentizitätsbescheinigung für einen Benutzer, aufweisend:
- eine Bereitstellungseinheit, die dazu ausgelegt ist,
einen öffentlichen Mandantenschlüssel für einen Mandanten bereitzustellen, der dem Benutzer zugeordnet wird,
und
- eine Erzeugungseinheit, die dazu ausgelegt ist, eine Anfrage zum Ausstellen der kryptographisch geschützten Authentizitätsbescheinigung zu bilden, wobei die Anfrage, die einen öffentlichen Benutzerschlüssel für den Benutzer enthält, mit Hilfe des dem bereitgestellten öffentlichen Mandantenschlüssels zugeordneten privaten Mandantenschlüssels geschützt und/oder digital signiert wird und wobei die Anfrage einen vom öffentlichen Mandantenschlüssel abhängigen Mandantenidentifikator enthält, welcher Mandantenidentifikator aus dem Hashwert des öffentlichen Mandantenschlüssels bildbar ist, wobei ein Mandant nur Zertifikate anfordern kann, die seinem kryptographischen Mandanten-Identifikator zugeordnet sind.

7. Vorrichtung nach dem vorhergehenden Anspruch 6 , **dadurch gekennzeichnet, dass** die Anfrage zum Ausstellen der kryptographisch geschützten Authentizitätsbescheinigung nach einer Authentifizierung des Benutzers bildbar und/oder übertragbar ist.

8. Vorrichtung nach einem der vorhergehenden Ansprüche 6 oder 7, **dadurch gekennzeichnet, dass** die Anfrage über eine mit Hilfe einer Mandantenkennung oder mit Hilfe des gebildeten Mandantenidentifikators authentisierte Kommunikationsverbindung übertragbar ist.

9. Computerprogrammprodukt, das direkt in einen Speicher eines oder mehrerer digitaler Prozessoren ladbar ist, umfassend Programmcodeteile, die dazu geeignet sind, die Schritte des Verfahrens nach einem der vorhergehenden Verfahrensansprüche durchzuführen.

## Claims

1. Method for issuing a cryptographically protected certificate of authenticity (CERT) for a user (B1, B2, B3), having the following steps:
- providing a public user key,
- providing a public client key for a client, which is assigned to the user, wherein a client is set up completely automatically in that a request for a certificate is checked by the public client key,
- forming a request (CSR), which contains a cryptographic client identifier (M-ID), which is dependent on the public client key as well as the public user key and with the aid of the private client key assigned to the provided public client key is protected and/or digitally signed, and
- issuing a cryptographically protected certificate of authenticity, which contains the public user key as well as an information element for identification or marking of the client, which has protected and/or digitally signed the request by means of its private client key and so identifies the client, wherein the cryptographically protected certificate of authenticity contains or references the cryptographic client identifier (M-ID), which is formed dependent on the public client key from the hash value thereof.

2. Method according to the preceding claim, **characterised in that** the request for issuing the cryptographically protected certificate of authenticity is formed and/or transferred after an authentication of the user.

3. Method according to one of the preceding claims, **characterised in that** the request is transferred via a communications link authenticated with the aid of a client identification or with the aid of the client identifier that has been formed.

4. Method according to one of the preceding claims, **characterised in that** a certificate validation is carried out, which comprises:
- ascertaining the cryptographic client identifier (M-ID), which is explicitly or implicitly configured from a separate certificate,
- accepting the certificate when the requester belongs to the same client as the checking node or is known to and accepted by the client.

5. Apparatus (CA) for issuing a cryptographically protected certificate of authenticity for a user with the aid of a provided public user key, having:
- a verification unit, which is configured to issue a cryptographically protected certificate of authenticity, which contains the public user key and identifies the client, wherein it verifies the ownership by the client of a previous request for a certificate of authenticity and wherein a client is set up completely automatically in that a request for a certificate is checked by the public client key, wherein the certificate of authenticity identifying the client contains or references a cryptographic client identifier, which can be formed dependent on the client key.

6. Apparatus (RA) for issuing a cryptographically protected certificate of authenticity for a user, having:
- a provision unit, which is configured to provide a public client key for a client, which is assigned to the user,
and
- a generating unit, which is configured to form a request for issuing the cryptographically protected certificate of authenticity, wherein the request, which contains a public user key for the user, is protected and/or is digitally signed with the aid of the private client key assigned to the provided public client key and wherein the request contains a client identifier dependent on the public client key, which client identifier can be formed from the hash value of the public client key, wherein a client can only request certificates, which are assigned to its cryptographic client identifier.

7. Apparatus according to the preceding claim 6, **characterised in that** the request for issuing the cryptographically protected certificate of authenticity can be formed and/or transferred after an authentication of the user.

8. Apparatus according to one of the preceding claims 6 or 7, **characterised in that** the request can be transferred via a communications link authenticated with the aid of a client identification or with the aid of the client identifier that has been formed.

9. Computer program product, which can be loaded directly into a storage device or one or more digital processor(s), comprising program code segments, which are capable of carrying out the steps of the method according to one of the preceding method claims.

## Revendications

1. Procédé d'établissement d'un certificat (CERT) d'authentification protégé de manière cryptographique pour un utilisateur (B1, B2, B3), comportant les stades suivants :
- on se procure une clé publique d'utilisateur,
- on se procure une clé publique de mandant pour un mandant, qui est affecté à l'utilisateur, dans lequel un mandant est conçu d'une manière entièrement automatique par le fait qu'une demande de certificat est contrôlée par la clé publique de mandant,
- on forme une demande (CSR), qui contient un identifiant (M-ID) de mandant cryptographique dépendant de la clé publique de mandant, ainsi que la clé publique d'utilisateur et qui est signée, de manière protégée et/ou numérique, à l'aide de la clé de mandant privée affectée à la clé publique de mandant que l'on s'est procurée, et
- on établit un certificat d'authentification protégé de manière cryptographique, qui contient la clé publique d'utilisateur ainsi qu'un élément d'information pour l'identification ou la caractérisation du mandant, qui a signé, de manière protégée et/ou numérique, la demande au moyen de sa clé privée de mandant et qui identifie ainsi le mandant, dans lequel le certification d'authentification protégé de manière cryptographique contient l'identifiant (M-ID) de mandant cryptographique ou y fait référence, qui est formé en fonction de la clé publique de mandant à partir de sa valeur de hash.

2. Procédé suivant la revendication précédente, **caractérisé en ce que** l'on forme et/ou on transmet la demande d'établissement du certificat d'authenticité protégée de manière cryptographique, après une authentification de l'utilisateur.

3. Procédé suivant l'une des revendications précédentes, **caractérisé en ce que** l'on transmet la demande par une liaison de communication authentifiée à l'aide d'une caractérisation de mandant ou à l'aide de l'identifiant formé de mandant.

4. Procédé suivant l'une des revendications précédentes, **caractérisé en ce que** l'on effectue une validation du certificat, qui comprend :
- détermination de l'identifiant (M-ID) de mandant cryptographique, qui est configuré explicitement ou implicitement à partir de son propre certificat,
- acceptation du certificat si le point de demande appartient au même mandant que les nœuds contrôlés ou est connu ou accepté du mandant.

5. Dispositif (CA) d'une certification d'authenticité protégée de manière cryptographique pour un utilisateur à l'aide d'une clé publique d'utilisateur que l'on s'est procurée, comprenant :
- une unité de confirmation, qui est conçue pour établir un certificat d'authenticité protégé de manière cryptographique, qui contient la clé publique d'utilisateur et qui identifie le mandant, dans lequel il est confirmé l'appartenance au mandant d'un demande de certificat d'authenticité précédente et dans lequel un mandant est conçu d'une manière entièrement automatique, par le fait qu'une demande de certificat est contrôlée par la clé publique de mandant, dans lequel le certificat d'authenticité identifiant le mandant contient un identifiant de mandant cryptographique ou s'y réfère, qui peut être formé en fonction de la clé du mandant.

6. Dispositif (RA) d'établissement d'un certificat d'authenticité protégé de manière cryptographique pour un utilisateur, comportant :
- une unité de mise à disposition, qui est conçue pour mettre à disposition une clé publique de mandant pour un mandant, qui est affectée à l'utilisateur, et
- une unité de production, qui est conçue pour former une demande d'établissement du certificat d'authenticité protégée de manière cryptographique, dans lequel la demande, qui contient une clé publique d'utilisateur pour l'utilisateur est signée de manière protégée et/ou numérique, à l'aide de la clé privée de mandant affectée à la clé publique de mandant, qui a été déjà mise à disposition, et dans lequel la demande contient un identifiant de mandant, lequel identifiant de mandant peut être formé à partir de la valeur de hash de la clé publique de mandant, dans lequel un mandant ne peut demander que des certificats, qui sont affectés à son identifiant de mandant cryptographique.

7. Dispositif suivant la revendication 6 précédente, **caractérisé en ce que** la demande d'établissement du certificat d'authenticité protégée de manière cryptographique peut être formée et/ou transmise après une authentification de l'utilisateur.

8. Dispositif suivant l'une des revendications 6 ou 7 précédentes, **caractérisé en ce que** la demande peut être transmise par une liaison de communication authentifiée à l'aide d'une caractéristique de mandant ou à l'aide de l'identifiant de mandant formé.

9. Produit de programme d'ordinateur, qui peut être chargé directement dans une mémoire d'un ou de plusieurs processeurs numériques, comprenant des parties de code de programme, qui sont propres à effectuer les stades du procédé suivant l'une des revendications précédentes de procédé.
